# FASCICULE DE BREVET EUROPEEN

(11) **EP 1 215 117 B1**
(45) Date de publication et mention de la délivrance du brevet: **17.12.2003**
(21) Numéro de dépôt: 01402923.5
(22) Date de dépôt: 14.11.2001
(51) Int. Cl.: B64D 43/00

(54) **Indicateur de pilotage pour un aéronef, destiné à fournir le rapport de pressions moteur**
Flugzeugsteuerungsanzeige zum Anzeigen des Triebwerkdruckverhältnisses
Pilot display for an aircraft, indicating engine pressure ratio

(30) Priorité: 13.12.2000 FR 0016234
(43) Date de publication de la demande: 19.06.2002
(73) Titulaire: AIRBUS FRANCE, 31060 Toulouse (FR)
(72) Inventeur: Blondel, Francis, 76200 Dieppe (FR); Thomas, Rudiger, 31700 Cornebarrieu (FR)
(74) Mandataire: Hauer, Bernard

(56) Documents cités:
- WO-A-97/42466
- DE-A- 3 315 386
- FR-A- 2 731 069

## Description

La présente invention concerne un indicateur de pilotage pour un aéronef, destiné à fournir le rapport de pressions moteur d'un moteur dudit aéronef.

Dans le cadre de la présente invention, on entend par rapport de pressions moteur le rapport entre les pressions à l'entrée et à la sortie du moteur, qui est connu dans le langage aéronautique sous l'abréviation EPR ("Engine Pressure Ratio" en anglais).

On sait qu'un indicateur de pilotage de ce type comporte généralement :
- des moyens d'acquisition et de traitement d'informations qui déterminent en temps réel la valeur effective du rapport de pressions moteur ; et
- des moyens d'affichage qui présentent sur un écran de visualisation ledit rapport de pressions moteur, ledit écran de visualisation étant pourvu d'un cadran gradué en valeurs dudit rapport et d'une aiguille dont la position sur ledit cadran correspond à ladite valeur effective.

De plus, la valeur maximale dudit rapport de pressions moteur est généralement signalée par un symbole particulier prévu sur ledit cadran.

Avec un tel indicateur de pilotage, les pilotes ont souvent beaucoup de difficultés à évaluer le niveau effectif de la poussée délivrée par le moteur aux régimes intermédiaires, en particulier à l'approche d'une piste d'atterrissage.

Ces difficultés sont accrues par le fait que le rapport EPR présente de grandes variations de ses limites maximale et minimale, en fonction des conditions de vol et en particulier en fonction du nombre de Mach, de l'altitude et de la température extérieure.

Pour pallier ce déficit d'informations, les pilotes ont souvent recours aux informations fournies par un indicateur de paramètre N1 (vitesse de rotation du module basse pression) du moteur. Un tel indicateur N1 connu, qui est facilement lisible et compréhensible, donne aux pilotes une information (vitesse de rotation) leur permettant de mieux évaluer le niveau de poussée délivrée par le moteur.

Toutefois, cette solution usuelle n'est pas satisfaisante, puisqu'elle nécessite la surveillance de deux indicateurs différents et le contrôle simultané de deux types d'informations.

Un tel indicateur est connu de DE-A-3315386, qui montre toutes les caractéristiques du préambule de la revendication indépendante.

La présente invention concerne un indicateur de pilotage destiné à fournir le rapport pressions moteur, permettant de remédier à ces inconvénients.

A cet effet, ledit indicateur du type comportant :
- des moyens d'acquisition et de traitement d'informations qui déterminent en temps réel la valeur effective du rapport de pressions moteur ; et
- des moyens d'affichage qui présentent sur un écran de visualisation ledit rapport de pressions moteur, ledit écran de visualisation étant pourvu d'un cadran gradué en valeurs du rapport de pressions moteur et d'une aiguille dont la position sur ledit cadran correspond à ladite valeur effective du rapport de pressions moteur,
est remarquable selon l'invention en ce que lesdits moyens d'acquisition et de traitement d'informations déterminent de plus en temps réel des valeurs minimale et maximale pour ledit rapport de pressions moteur, et en ce que lesdits moyens d'affichage présentent de plus sur ledit cadran un secteur circulaire, d'amplitude et de position variables, qui est différencié du fond du cadran et qui est délimité par deux rayons, dont les positions sur ledit cadran gradué correspondent respectivement auxdites valeurs minimale et maximale du rapport de pressions moteur.

Ainsi, grâce à l'invention, on indique en permanence et en temps réel ledit secteur circulaire, c'est-à-dire le domaine de valeurs possibles pour le rapport de pressions moteur EPR entre lesdites valeurs minimale et maximale, ce qui rend plus clair pour les pilotes les variations dudit domaine de valeurs et surtout leur fournit un repère visuel et intuitif du niveau de poussée effectif délivré par le moteur.

De plus, grâce à l'invention, on différencie bien les présentations de la valeur effective du rapport EPR (visualisée par l'aiguille qui permet de donner une indication précise de cette valeur) et du domaine de valeurs possibles de ce rapport EPR (visualisé par le secteur circulaire qui donne une indication visuelle d'ensemble de ce domaine de valeurs). Ainsi, l'indicateur est facilement lisible et les différentes informations peuvent être bien distinguées les unes des autres.

Dans le cadre de la présente invention, on entend évidemment par secteur circulaire une partie de disque qui est limitée par deux rayons (qui illustrent respectivement lesdites valeurs minimale et maximale du rapport de pressions moteur EPR).

De façon avantageuse, lesdits moyens d'affichage sont formés de manière à présenter ledit secteur circulaire uniquement lorsque le moteur correspondant est en fonctionnement.

Ainsi, la disparition du secteur circulaire dudit cadran permet de signaler aux pilotes, de façon simple et efficace, une panne du moteur ou le passage en mode dégradé (lorsque les informations permettant de calculer le rapport EPR ne sont pas disponibles) ou le passage en mode "reverse" (inverseurs de poussée déployés).

En outre, avantageusement, ledit secteur circulaire présente une couleur (grise par exemple) qui est différente de celle du fond du cadran.

Par ailleurs, de façon avantageuse, lesdits moyens d'acquisition et de traitement d'informations comprennent un système de régulation à pleine autorité du moteur du type FADEC, qui fournit lesdites valeurs minimale et maximale du rapport de pressions moteur.

En outre, avantageusement, lesdits moyens d'affichage présentent de plus sur ledit écran de visualisation un symbole, dont la position sur ledit cadran gradué correspond à ladite valeur maximale dudit rapport de pressions moteur.

Les figures du dessin annexé feront bien comprendre comment l'invention peut être réalisée. Sur ces figures, des références identiques désignent des éléments semblables.

La figure 1 est le schéma synoptique d'un indicateur de pilotage conforme à l'invention.

Les figures 2 à 6 illustrent l'écran de visualisation d'un indicateur de pilotage conforme à l'invention pour différentes phases de vol de l'aéronef.

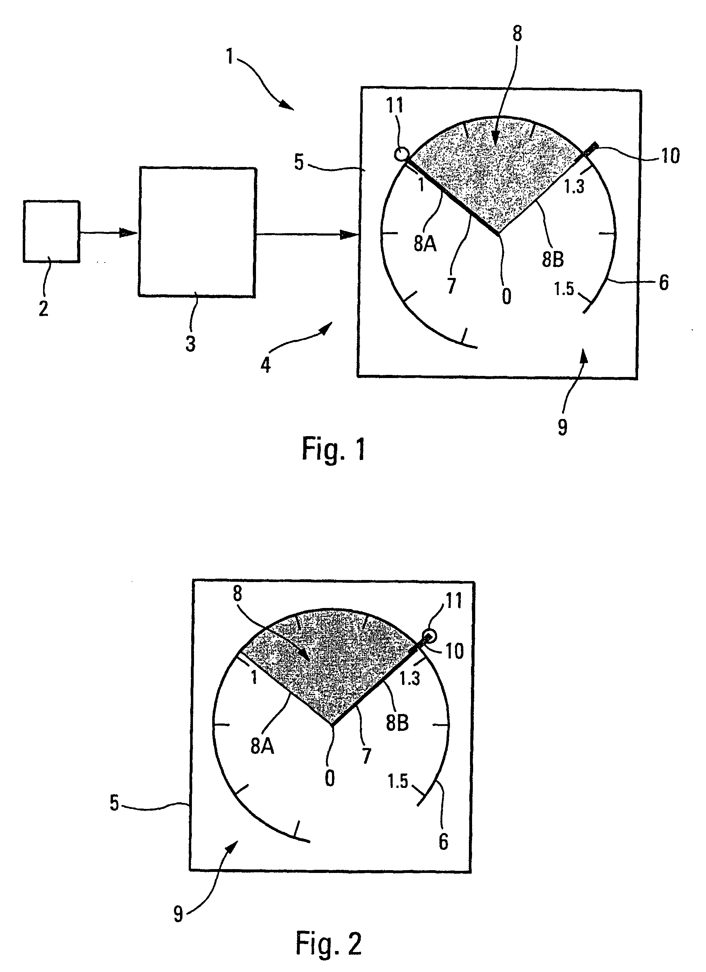

L'indicateur de pilotage 1 conforme à l'invention et représenté schématiquement sur la figure 1 est destiné à fournir sur un aéronef, en particulier un avion de transport civil, le rapport de pressions moteur (rapport EPR) d'un moteur dudit aéronef.

A cet effet, ledit indicateur 1 comporte de façon connue :
- des moyens 2 d'acquisition d'informations et des moyens 3 de traitement d'informations qui déterminent en temps réel la valeur effective du rapport de pressions moteur EPR ; et
- des moyens d'affichage 4 qui présentent sur un écran de visualisation 5 ledit rapport de pressions moteur EPR. A cet effet, cet écran de visualisation 5 est pourvu d'un cadran 6 en forme de disque qui est gradué en valeurs du rapport de pressions moteur et d'une aiguille 7 qui tourne autour d'un point 0, centre du cadran 6, et dont la position sur ledit cadran 6 indique ladite valeur effective du rapport de pressions moteur EPR.

Selon l'invention :
- lesdits moyens 2 et 3 déterminent de plus en temps réel des valeurs minimale et maximale pour ledit rapport EPR ; et
- lesdits moyens d'affichage 4 présentent de plus sur ledit cadran 6 un secteur circulaire 8, d'amplitude et de position variables, qui est différencié du fond 9 du cadran 6 et qui est délimité sur ledit cadran gradué 6 par deux rayons 8A et 8B dont les positions correspondent respectivement auxdites valeurs minimale et maximale du rapport EPR.

Ainsi, grâce à l'invention, on indique en permanence et en temps réel ledit secteur circulaire 8, c'est-à-dire le domaine de valeurs possibles pour le rapport de pressions moteur EPR (entre lesdites valeurs minimale et maximale), ce qui rend plus clair pour les pilotes les variations dudit domaine de valeurs et surtout leur fournit un repère visuel et intuitif du niveau de poussée effectif délivré par le moteur.

De plus, grâce à l'invention, on différencie les présentations de la valeur effective du rapport EPR (visualisée par l'aiguille 7 qui permet de donner une indication précise de cette valeur) et du domaine de valeurs possibles de ce rapport EPR (visualisé par le secteur circulaire 8 qui donne une indication visuelle d'ensemble dudit domaine de valeurs). Ainsi, l'indicateur 1 est facilement lisible et les différentes informations (rapport EPR et domaine de valeurs), bien que présentées sur le même cadran 6, sont aisément distinguables l'une de l'autre.

Selon l'invention, lesdits moyens d'affichage 4 sont formés de manière à présenter ledit secteur circulaire 8 uniquement lorsque le moteur correspondant est en fonctionnement.

Par conséquent, la disparition sur ledit cadran 6 d'un secteur circulaire 8 antérieurement présent permet de signaler aux pilotes de l'aéronef, de façon simple et efficace, la panne dudit moteur.

Pour différencier le secteur circulaire 8 du fond 9, ledit secteur circulaire 8 présente, par exemple, une couleur ou un noircissement qui est différent de celui du fond 9.

L'écran de visualisation 5 comporte, de plus, sur le cadran gradué 6:
- un symbole particulier 10, par exemple de couleur ambre, dont la position sur ledit cadran 6 illustre la valeur maximale du rapport EPR. Ce symbole 10 est donc continuellement aligné avec le rayon de bord 8B du secteur circulaire 8 ; et
- un symbole 11, par exemple un rond bleu, qui indique la valeur du rapport EPR correspondant à la position de la manette.

On notera que lesdits moyens 3 déterminent les valeurs minimale et maximale du rapport EPR, de façon connue, en fonction des phases de vol de l'aéronef. Généralement, ils déterminent ces valeurs, notamment en fonction du nombre de Mach, de l'altitude de l'aéronef et de la température extérieure.

Dans un mode de réalisation préféré, ces valeurs sont issues d'un système usuel de régulation à pleine autorité du moteur, c'est-à-dire d'un système de surveillance de type FADEC ("Full Authority Digital Engine Control").

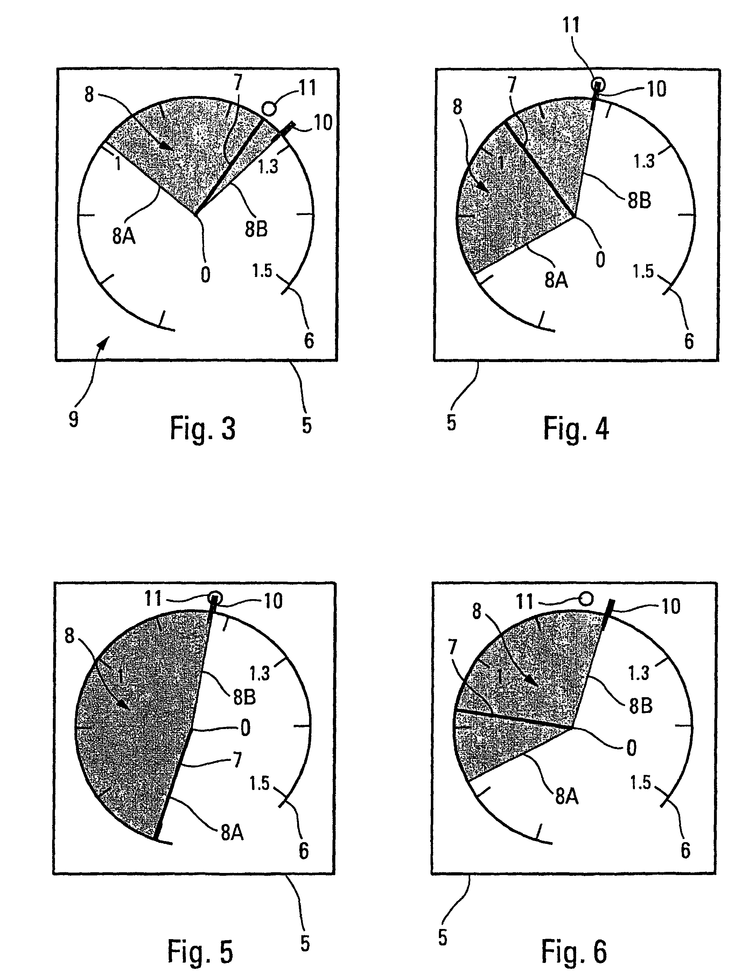

A titre d'illustration, on a représenté sur les figures 1 à 6 les informations fournies conformément à l'invention par l'écran de visualisation 5, pour différentes phases de vol de l'avion (non représenté) équipé dudit indicateur 1. Dans cette illustration, ces phases de vol correspondent respectivement aux positions de l'avion, pour lesquelles il se trouve :
- au ralenti au sol (figure 1);
- au décollage (figure 2) ;
- lors de la montée (figure 3) ;
- en vol de croisière (figure 4) ;
- au ralenti au début de la descente (figure 5) ; et
- à l'approche (figure 6).

On notera à titre d'illustration que, sur les figures 3, 4 et 5 par exemple, le secteur circulaire 8 présente à chaque fois des positions et des amplitudes différentes. Bien entendu, la position du secteur circulaire 8 est définie par la position des deux rayons 8A et 8B et son amplitude est définie par l'écart angulaire entre ces deux rayons 8A et 8B.

## Revendications

1. Indicateur de pilotage pour un aéronef, destiné à fournir les valeurs d'un paramètre prédéterminé d'un moteur de l'aéronef, ledit indicateur de pilotage (1) comportant :
- des moyens d'acquisition et de traitement d'informations (2, 3) qui déterminent en temps réel la valeur effective dudit paramètre ; et
- des moyens d'affichage (4) qui présentent sur un écran de visualisation (5) ledit paramètre, ledit écran de visualisation (5) étant pourvu d'un cadran (6) comportant un secteur circulaire (8), d'amplitude variable, qui est différencié du fond (9) du cadran (6),
ledit secteur circulaire (8) étant une partie d'un disque, qui présente une position variable et qui est délimitée par deux rayons (8A, 8B) dont les positions sur ledit cadran (6) correspondent respectivement aux valeurs minimale et maximale dudit paramètre, lesdits moyens d'affichage (4) étant formés de manière à présenter ledit secteur circulaire (8) uniquement lorsque ledit moteur est en fonctionnement, **caractérisé en ce que** ledit paramètre est le rapport de pressions moteur, **en ce que** lesdits moyens d'acquisition et de traitement d'informations (2, 3) déterminent de plus en temps réel les valeurs minimale et maximale pour ledit rapport de pressions moteur, **en ce que** ledit cadran (6) est ledit disque qui est gradué en valeurs du rapport de pressions moteur et qui comporte une aiguille (7) tournant autour du centre du disque, et dont la position sur ledit cadran (6) correspond à ladite valeur effective du rapport de pressions moteur, et **en ce que** lesdits moyens d'affichage (4) présentent de plus sur ledit écran de visualisation (5) un symbole (10), dont la position sur ledit cadran gradué (6) correspond à ladite valeur maximale dudit rapport de pressions moteur.

2. Indicateur de pilotage selon la revendication 1,
**caractérisé en ce que** ledit secteur circulaire (8) présente une couleur qui est différente de celle du fond (9) du cadran (6).

3. Indicateur de pilotage selon l'une des revendications 1 et 2,
**caractérisé en ce que** ledit secteur circulaire (8) est gris.

4. Indicateur de pilotage selon l'une quelconque des revendications précédentes,
**caractérisé en ce que** lesdits moyens d'acquisition et de traitement d'informations (2, 3) comprennent un système de régulation à pleine autorité du moteur, qui fournit lesdites valeurs minimale et maximale du rapport de pressions moteur.

5. Indicateur de pilotage selon l'une quelconque des revendications précédentes,
**caractérisé en ce que** lesdits moyens d'affichage (4) présentent de plus, sur ledit écran de visualisation (5), un symbole (11) qui indique la valeur du rapport de pressions moteur correspondant à la position de la manette de l'aéronef.

## Patentansprüche

1. Flugzeugsteuerungsanzeige zum Anzeigen der Werte eines vorbestimmten Parameters eines Flugzeugtriebwerks, wobei die Steuerungsanzeige (1) Folgendes umfasst:
· Informationserfassungs- und -verarbeitungsmittel (2, 3), die in Echtzeit den Effektivwert des Parameters ermitteln, und
· Anzeigemittel (4), die auf einer Anzeigeeinheit (5) den genannten Parameter anzeigen, wobei die Anzeigeeinheit (5) mit einer Skala (6) ausgestattet ist, die einen kreisförmigen Sektor (8) mit veränderlicher Amplitude umfasst, der sich vom Untergrund (9) der Skala (6) unterscheidet,
wobei der kreisförmige Sektor (8) ein Teil einer Scheibe ist,der eine veränderliche Position besitzt und von zwei Radien (8A, 8B) begrenzt wird, deren Positionen auf der Bogenskala (6) dem Mindest- beziehungsweise dem Höchstwert des Parameters entspricht und die Anzeigemittel (4) so konzipiert sind, dass sie den kreisförmigen Sektor (8) ausschließlich anzeigen, wenn das Triebwerk in Betrieb ist,
**dadurch gekennzeichnet, dass** der Parameter das Triebwerkdruckverhältnis ist, dass die Informationserfassungs- und -verarbeitungsmittel (2, 3) außerdem in Echtzeit den Mindestund den Höchstwert für das Triebwerkdruckverhältnis ermitteln, dass die Skala (6) die Scheibe ist, die in Werte des Triebwerkdruckverhältnisses eingeteilt ist und einen Zeiger (7) umfasst, der sich um den Mittelpunkt der Scheibe dreht und dessen Stellung auf der Skala (6) dem Effektivwert des Triebwerkdruckverhältnisses entspricht, und dadurch, dass die Anzeigemittel (4) auf der Anzeigeeinheit (5) außerdem ein Symbol (10) besitzen, dessen Position auf der Bogenskala (6) dem Höchstwert des Triebwerkdruckverhältnisses entspricht.

2. Flugzeugsteuerungsanzeige nach Anspruch 1,
**dadurch gekennzeichnet, dass** der kreisförmige Sektor (8) eine Farbe hat, die anders ist als die des Untergrunds (9) der Skala (6).

3. Flugzeugsteuerungsanzeige nach einem der Ansprüche 1 und 2,
**dadurch gekennzeichnet, dass** der kreisförmige Sektor (8) grau ist.

4. Flugzeugsteuerungsanzeige nach einem der vorstehenden Ansprüche,
**dadurch gekennzeichnet, dass** die Informationserfassungs- und -verarbeitungsmittel (2, 3) ein Triebwerkregelsystem mit vollständiger Berechtigung umfassen, das den Mindest- und den Höchstwert des Triebwerkdruckverhältnisses liefert.

5. Flugzeugsteuerungsanzeige nach einem der vorstehenden Ansprüche,
**dadurch gekennzeichnet, dass** die Anzeigemittel (4) außerdem auf der Anzeigeeinheit (5) ein Symbol (11 ) zeigen, das den Wert des Triebwerkdruckverhältnisses anzeigt, das der Position des Steuerhebels des Flugzeugs entspricht.

## Claims

1. Flight control indicator for an aircraft, intended to supply the values of a predetermined parameter of an engine of the aircraft, the said flight control indicator (1) comprising:
- means for acquiring and for processing information (2, 3) which determine in real time the actual value of the said parameter; and
- display means (4) which present on a display screen (5) the said parameter, the said display screen (5) being provided with a dial (6) comprising a circular sector (8), of variable amplitude, which is differentiated from the background (9) of the dial (6), the said circular sector (8) being a part of a disc, which part presents a variable position and is delimited by two radii (8A, 8B) whose positions on the said dial (6) correspond respectively to the minimum and maximum values of the parameter, the said display means (4) being formed in such a way as to present the said circular sector (8) only when the said engine is operational, **characterized in that** the said parameter is the engine pressure ratio, **in that** the said means for acquiring and for processing information (2, 3) moreover determine in real time minimum and maximum values for the said engine pressure ratio, **in that** the said dial (6) is the disc which is graduated in values of the engine pressure ratio and which comprises a needle (7) turning about the centre of the disc, and whose position on the said dial (6) corresponds to the said actual value of the engine pressure ratio, and **in that** the said display means (4) moreover present on said display screen (5) a symbol (10), whose position on said gradual dial (6) corresponds to said maximum value of said engine pressure ratio.

2. Flight control indicator according to Claim 1,
**characterized in that** the said circular sector (8) exhibits a colour which is different from that of the background (9) of the dial (6).

3. Flight control indicator according to either of Claims 1 and 2, **characterized in that** the said circular sector (8) is grey.

4. Flight control indicator according to any one of the preceding claims, **characterized in that** the said means for acquiring and for processing information (2, 3) comprise a full authority control system for the engine, which supplies the said minimum and maximum values of the engine pressure ratio.

5. Flight control indicator according to any one of the preceding claims, **characterized in that** the said display means (4) moreover present on the said display screen (5) a symbol (11) which indicates the value of the engine pressure ratio corresponding to the position of the throttle of the aircraft.
